# EUROPEAN PATENT SPECIFICATION

(11) **EP 2 706 600 B1**
(45) Date of publication and mention of the grant of the patent: **01.04.2015**
(21) Application number: 13167121.6
(22) Date of filing: 08.05.2013
(51) Int. Cl.: H01M 10/42, H01M 10/0567

(54) **Rechargeable lithium battery and method of manufacturing the same**
Wiederaufladbare Lithiumbatterie und Verfahren zur Herstellung davon
Batterie au lithium rechargeable et son procédé de fabrication

(30) Priority: 07.09.2012 US 201261698311 P; 14.03.2013 US 201313830119
(43) Date of publication of application: 12.03.2014
(73) Proprietor: Samsung SDI Co., Ltd., Yongin-si, Gyeonggi-do (KR)
(72) Inventor: Suh, Seung Bum, Gyeonggi-do (KR); Yang, Ho-Seok, Gyeonggi-do (KR); Lee, Maeng-Eun, Gyeonggi-do (KR); Park, Dai-In, Gyeonggi-do (KR); Kang, Jee-Won, Gyeonggi-do (KR); Lim, Jin-Hyunk, Gyeonggi-do (KR); Hwang, Hee-Yeon, Gyeonggi-do (KR); Kim, Yun-Hee, Gyeonggi-do (KR); Cheong, Kyeong-Beom, Gyeonggi-do (KR); Lee, Seon-Hong, Gyeonggi-do (KR); You, Ho-Gon, Gyeonggi-do (KR); Kashaev, Alexey, Gyeonggi-do (KR); Shin, Dae-Yup, Gyeonggi-Do (KR)
(74) Representative: Mounteney, Simon James

(56) References cited:
- WO-A1-97/35332
- WO-A1-2007/066822
- WO-A1-2008/004790
- JP-A- 2009 032 653
- JP-A- 2009 158 464
- US-A1- 2008 102 369
- US-A1- 2008 311 481
- US-A1- 2009 214 938

## Description

### BACKGROUND OF THE INVENTION

### (a) Field of the Invention

This disclosure relates to a rechargeable lithium battery and a method of manufacturing the same.

### (b) Description of the Related Art

Recently, portable information electronic devices such as cell phones, laptops, tablet PCs and the like have rapidly become smaller and lighter. Such devices require a battery with a high-capacity as a power source. In response to this demand, a non-aqueous electrolyte rechargeable lithium battery using a non-aqueous electrolyte for transporting lithium ions between positive and negative electrodes has been widely used to provide a rechargeable battery having high power and high energy density. Such a non-aqueous electrolyte rechargeable lithium battery uses an oxide that is capable of intercalating lithium ions and the positive active material is made of lithium and a transition metal element (or elements), for example, LiCoO₂, LiMn₂O₄,
LiNi₁₋ₓCoₓO₂ (0 < x < 1), and the like. As for a negative active material, the non-aqueous electrolyte rechargeable lithium battery includes artificial or natural graphite for intercalating/deintercalating lithium, a carbon-based material such as hard carbon, or a material that is capable of alloying with lithium such as Si, Sn, and the like. However, portable information electronic devices tend to consume more electricity as they are increasingly used for playing a movie, a game, and the like. Thus, such devices further require a battery with high-capacity as a power source. The non-aqueous electrolyte rechargeable lithium battery can be made to have a high-capacity by 1) increasing capacity of an active material, 2) increasing charge voltage, 3) increasing the charge amount of the active material and thus, charge density, and the like. However, a particular problem associated with the method of increasing charge voltage of an active material is the decomposition of an electrolyte. In particular, when the active material is stored at a high temperature or continually charged, the electrolyte is decomposed and can generate gas. Thus, the battery expands and/or the internal pressure of the battery increases. Accordingly, attempts to improve the safety of such batteries have continually attempted by: using an additive to increase the fire point to delay the initiation of a battery fire; and/or decreasing a thickness change and thus improving thermal impact durability.

US2009/214938, JP2009032653, JP2009158464, WO2008/004790, US2008/0311481, WO2007/066822, US2008/012369, and WO97/35332 all describe the use of compounds containing cyano groups in non-aqueous electrolytes.

### SUMMARY OF THE INVENTION

One embodiment provides a rechargeable lithium battery having improved thermal impact durability. Another embodiment provides a method of manufacturing a rechargeable lithium battery having improved thermal impact durability. In one embodiment, there is a rechargeable lithium battery comprising a compound of Chemical Formula 1: 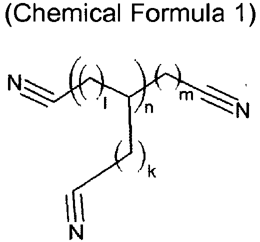 wherein, in Chemical Formula 1, k, l, and m are each an integer from 0 to 10, and n is an integer of 1 to 5, provided that the compound of Chemical Formula 1 is not symmetrical. In another embodiment, there is an electrolyte composition for a rechargeable lithium battery compriding the compound of Chemical Formula 1 disclosed above.

Specifically, in the above Chemical Formula 1, n is an integer from 1 to 3 and k, I, and m are each an integer of 0 to 7. Even more specifically, in above Chemical Formula 1, n is 1 or 2, k is 0, and l and m are each an integer from 1 to 5. Still more specifically, in above Chemical Formula 1, n is 1, k is 0, l is 2, and m is 3 and/or k is 0, l is 1, m is 4 and n is 1. In an embodiment of the invention, the integer values of k, l and m are different with respect to each other. In yet a further embodiment, when n is greater than 1, each k has the same integer value and each I has the same integer value. In an embodiment, the compound represented by above Chemical Formula 1 is 1,3,6-HTCN (1,3,6-Hexane Tri-Cyanide) or 1,2,6-HTCN (1,2,6-Hexane Tri-Cyanide). The compound represented by above Chemical Formula 1 can be included in a positive electrode for a rechargeable lithium battery. The compound represented by above Chemical Formula 1 is included in an electrolyte for a rechargeable lithium battery. The compound represented by above Chemical Formula 1 can be included in a negative electrode for a rechargeable lithium battery. The compound represented by above Chemical Formula 1 can be included in an amount of 0.1 to 10 % based on the total weight of each positive electrode, electrolyte, or negative electrode, respectively (e.g. the compound represented by above Chemical Formula 1 is included in an amount of 0.1 to 10 % based on the total weight of the electrolyte). In another embodiment, an electrode composition for a rechargeable lithium battery including the compound represented by above Chemical Formula 1 is provided. The composition can be a positive or negative electrode composition for a rechargeable lithium battery. In yet another embodiment, an electrolyte composition for a rechargeable lithium battery including the compound represented by above Chemical Formula 1 is provided. In still another embodiment, provided is a method of manufacturing a rechargeable lithium battery that includes preparing an electrode composition for a rechargeable lithium battery and applying the electrolyte composition on an electrode current collector. Accordingly, one embodiment of the present invention provides a rechargeable lithium battery having increased thermal impact durability and thus, improved safety.

In embodiments of the invention, the electrolyte composition for a rechargeable lithium battery compriding the compound of Chemical Formula 1 further comprises 1,3-propane sultone, optionally wherein the weight to weight ratio of 1,3-propane sultone to 1,3,6-HTCN or 1,2,6-HTCN is from 1:2 to 3:1; and optionally succinonitrile, optionally wherein the weight to weight ratio of succinonitrile to 1,3,6-HTCN or 1,2,6-HTCN, when present, is 1:2.

In yet further embodiments of the invention, the electrolyte composition for a rechargeable lithium battery compriding the compound of Chemical Formula 1 further comprises a non-aqueous organic solvent and a lithium salt, optionally wherein the non-aqueous organic solvent may include a carbonate-based, ester-based, ether-based, ketone-based, alcohol-based, aprotic solvent or mixtures thereof, optionally comprising an aromatic hydrocarbon-based solvent; and/or the lithium salt is selected from LiPF₆, LiBF₄, LiSbF₆, LiAsF₆, LiC₄F₉SO₃, LiClO₄, LiAlO₂, LiAlCl₄, LiN(CxF₂ₓ₊₁SO₂)(CyF_{2y+1}SO₂), (where x and y are natural numbers), LiCl, Lil, LiB(C₂O₄)₂ (lithium bis(oxalato) borate, LiBOB), or a combination thereof.

An aspect of the invention relates to a rechargeable lithium battery comprising a compound of Chemical Formula 1, as disclosed in Claim 1. Embodiments of this aspect are disclosed in Claims 3 to 11.

A further aspect of the invention relates to an electrolyte composition for a rechargeable lithium battery, comprising a compound of Chemical Formula 1, as described in Claim 2. Further embodiments of of this aspect are provided in Claims 3 to 9 and 12 to 14.

Hereinafter, further embodiments of this disclosure will be described in detail.

### BRIEF DESCRIPTION OF THE DRAWINGS

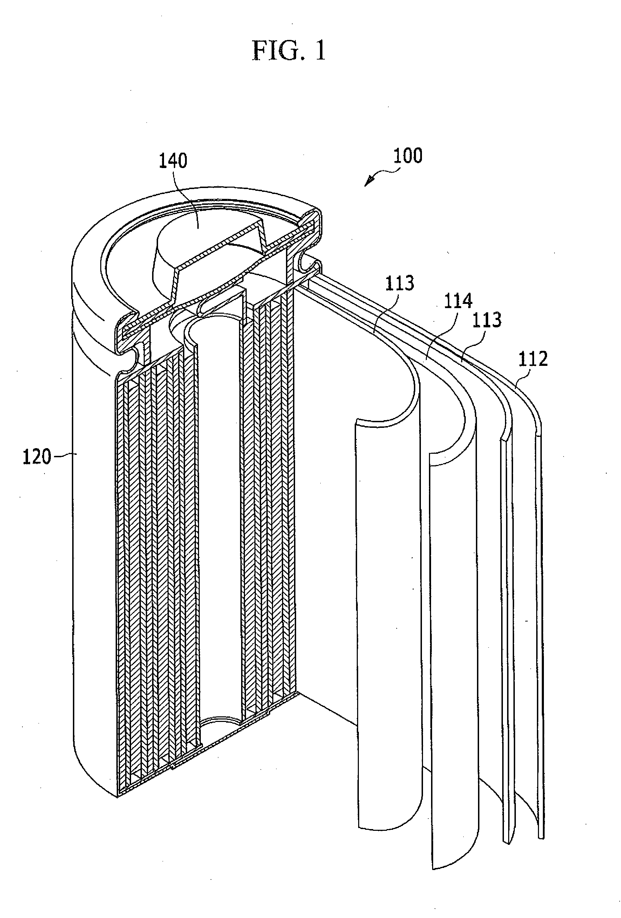

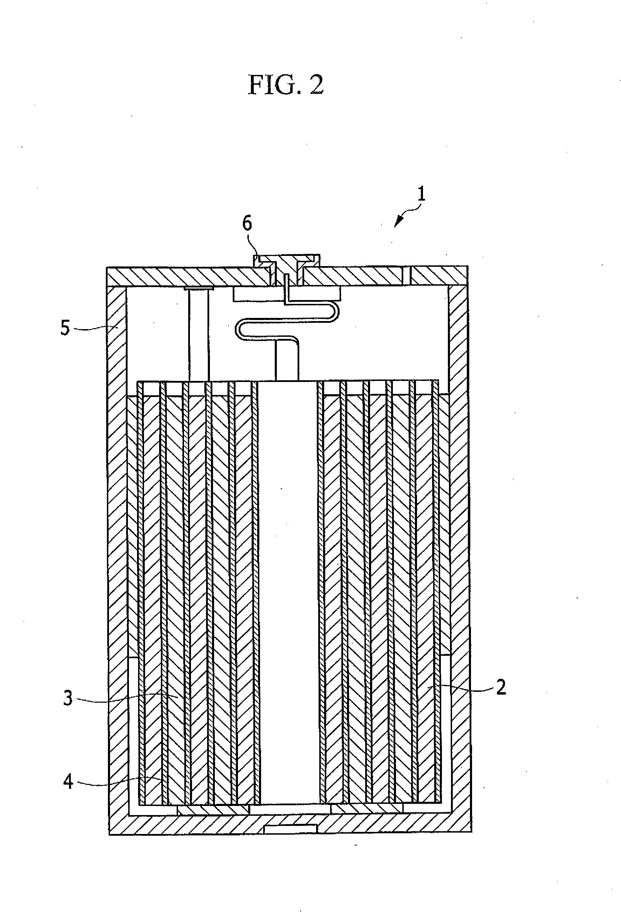

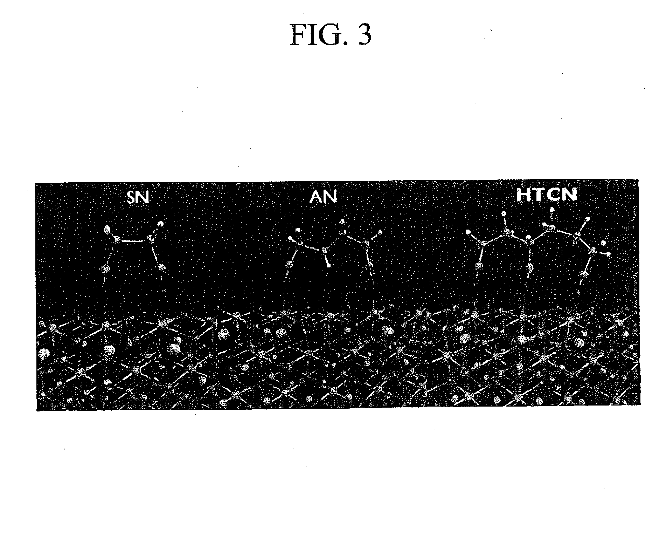

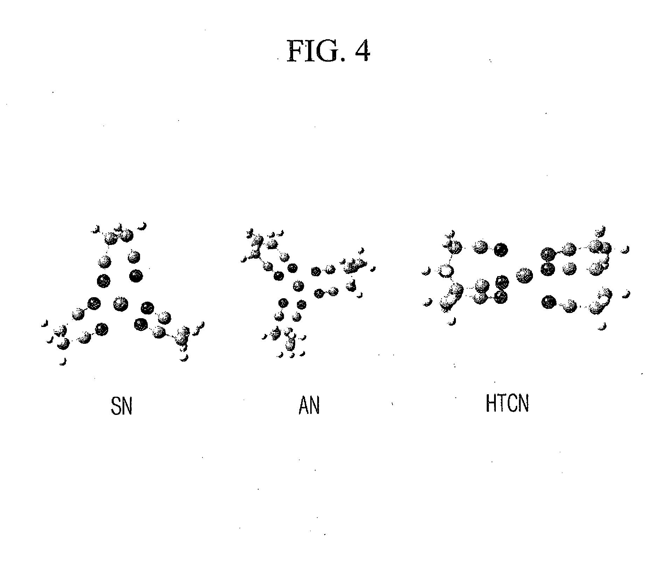

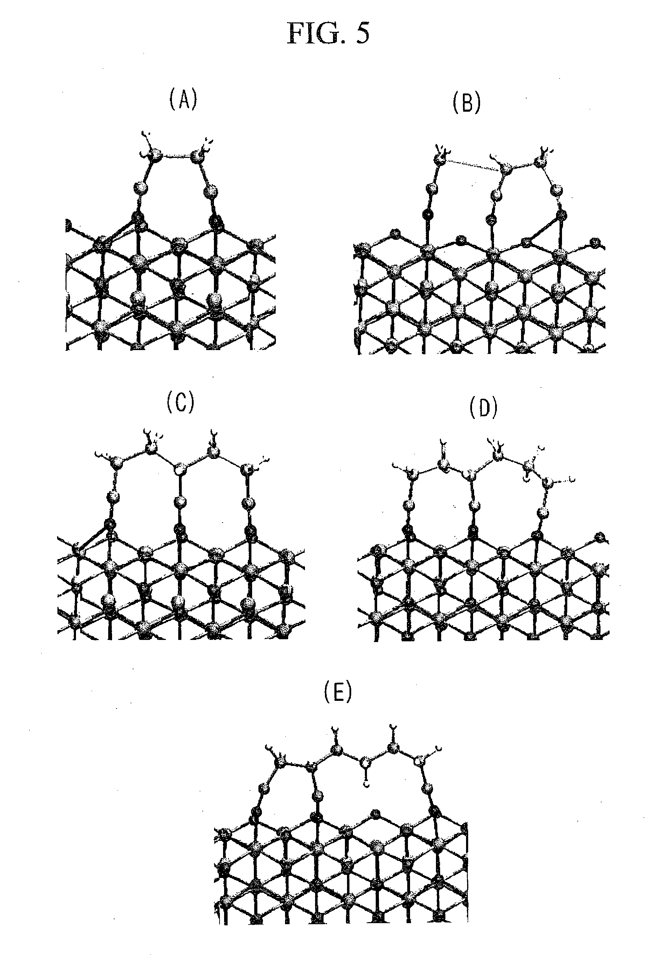

FIG. 1 is an exploded perspective view showing a rechargeable lithium battery according to one embodiment. FIG. 2 is a cross-sectional view showing a rechargeable lithium battery according to another embodiment. FIG. 3 is a schematic view showing that SN (succinonitrile), AN (adiponitrile), and 1,3,6-HTCN (Hexane Tri-Cyanide) are respectively bonded on the surface of an electrode active material. FIG. 4 is a schematic view showing that SN (succinonitrile), AN (adiponitrile), and 1,3,6-HTCN (1,3,6-Hexane Tri-Cyanide) respectively have a co-ordination bond with metal ions. FIGS. 5(a) to (c) are schematic views showing that a compound having two or more CN functional groups and an overall symmetry structure is bonded on the surface of an electrode active material. FIGS. 5 (d) and 5 (e) are schematic views showing that two compounds, 1,3,6-HTCN (1,3,6-hexane tricarbontrile) and 1,2,6-HTCN (1,2,6-hexane tricarbontrile), represented by Chemical Formula 1 according to the present invention, are respectively bonded on the surface of an electrode active material.

### DETAILED DESCRIPTION OF THE EMBODIMENTS

Embodiments of the present disclosure will hereinafter be described in detail. However, these embodiments are only examples, and this disclosure is not limited thereto.

When used herein, the terms "compises", "includes" etc can be replaced in certain embodiments by the terms "consisting of" or "consisting essentially of" etc.

One embodiment of the present invention provides a rechargeable lithium battery including a compound represented by following Chemical Formula 1 is provided: 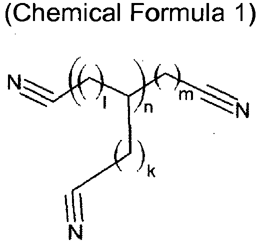 in Chemical Formula 1, k, l, and m are independently integers of 0 to 10, and n is an integer of 1 to 5, provided that either k, l, and m are different from one another or that the compound of Chemical Formula 1 is not symmetrical. Specifically, in above Chemical Formula 1, n is 1 to 3, k, l, and m are independently integers of 0 to 7, provided that either k, l, and m are different from one another or that the compound of Chemical Formula 1 is not symmetrical. Even more specifically, in above Chemical Formula 1, n is 1 or 2, k is 0, and l and m are independently integers of 1 to 5, provided that either k, l, and m are different from one another or that the compound of Chemical Formula 1 is not symmetrical. Still more specifically, in above Chemical Formula 1, n is 1, k is 0, l is 2, and m is 3. Alternatively, in above Chemical Formula 1, k is 0, l is 1, m is 4 and n is 1.

In an embodiment, the compound represented by above Chemical Formula 1 is HTCN (Hexane Tri-Cyanide), for example, 1,3,6-HTCN (1,3,6-Hexane Tri-Cyanide) or 1,2,6-HTCN (1,2,6-hexane tricarbontrile). The compound represented by above Chemical Formula 1 can be included in a positive electrode for a rechargeable lithium battery. The compound represented by above Chemical Formula 1 is included in an electrolyte for a rechargeable lithium battery. The compound represented by the above Chemical Formula 1 can be included in a negative electrode for a rechargeable lithium battery. The compound represented by the above Chemical Formula 1 can be included in an amount of 0.1 to 10 % based on the total weight of each positive electrode, electrolyte, or negative electrode, respectively (e.g. the compound represented by the above Chemical Formula 1 is included in an amount of 0.1 to 10 % based on the total weight the electrolyte). In general, as a rechargeable lithium battery is required to have a higher capacity and thus a higher energy density, the rechargeable lithium battery tends to become thicker due to deteriorated internal safety against thermal impact. It is important to control and decrease this change in thickness of the rechargeable lithium battery due to thermal impact as this will help to prevent the destruction of the mobile device and enable mobile devices to become thinner, as the change in thickness is important in determining the thickness of a mobile device.According to the embodiment of the present invention, a rechargeable lithium battery includes the compound represented by above Chemical Formula 1, and thus has:
less change in thickness due to thermal impact;
improved thermal impact durability; and
improved thermal impact safety.

Conventionally, PS (1,3-propane sultone) has been known as an additive for improving durability of a rechargeable lithium battery against thermal impact. PS is known to improve thermal safety of a rechargeable lithium battery, and thus its capacity retention at a high temperature. However, PS is a toxic material that causes cancer. In addition PS is a teratogenic material. In general, a thermal impact test is performed by heating and cooling a battery from 80° C to -40° C for one hour 30 times to apply stress. When the battery is allowed to stand at room temperature after applying stress and then has a thickness change that is less than or equal to a predetermined standard, then an improvement to the thermal impact safety of the battery is regarded as being accomplished. According to an embodiment of the present invention, a rechargeable lithium battery including the compound represented by Chemical Formula 1 has a decreased thickness change when a thermal impact is applied to it, as mentioned in the following Examples, and thus has improved safety.

The compound represented by above Chemical Formula 1 is a hydrocarbon compound including 3 to 7 CN functional groups, more specifically, 3 to 5 CN functional groups, and much more particularly, 3 CN functional groups. Without wishing to be bound to a particular theory, it is believed that the compound represented by above Chemical Formula 1 stably forms a film on the surface of a positive electrode and suppresses a side reaction between the positive electrode and an electrolyte, since unshared electron pairs of N at the terminal end of the CN has a co-ordination bond with various metals such as transition elements and the like of a positive active material. In addition, the compound is bonded with other materials included in the battery and plays a role in preventing the decomposition of the materials in the battery and suppressing an exothermic phenomenon and thus, a temperature increase in the battery. Furthermore, as the compound is bonded with other materials included in the battery it blocks formation of a black dot in the battery and suppresses a fine short circuit due to extraction on the surface of a negative electrode by metal impurities.

Accordingly, the compound represented by above Chemical Formula 1 can be included in any of the positive electrode, negative electrode, or electrolyte of the battery and may improve durability of the battery against thermal impact (e.g. the compound represented by above Chemical Formula 1 is included in the electrolyte of the battery).

As illustrated in the following Examples, the compound represented by above Chemical Formula 1 and having k, I, m, and n as defined above has much lower bonding energy with metal ions in the battery and thus, forms a more stable and stronger bond therewith than a hydrocarbon compound having only two CN functional groups at the terminal end or a similar compound having a symmetrical structure around the center of a compound having CN functional groups at the terminal ends (e.g. a compound that has C-2 symmetry), and accordingly, the Compound of Formula 1 significantly decreases the change in the thickness of a battery due to thermal impact.

The effect of decreasing a change in the thickness of a battery is illustrated by reference to FIGS. 3 to 5 accompanied in the present specification. In particular, FIG. 3 is a schematic view showing that each SN (succinonitrile), AN (Adiponitrile), and 1,3,6-HTCN (1,3,6-Hexane Tri-Cyanide) is bonded on a surface of an electrode active material. Based on the drawing, 1,3,6-HTCN is more stably bonded on the surface of an electrode active material than SN or AN. FIG. 4 is a schematic view showing that SNs (succinonitriles), ANs (adiponitriles), and 1,3,6-HTCNs (1,3,6-hexane tricarbonitriles) have coordinate bonds with a metal ion in the center. As for the 1,3,6-HTCNs, unlike SN or AN, two compounds, each having three CN functional groups, surrounds sterically and is bonded to a metal ion in the center. On the contrary, as for the SNs or ANs, three compounds, each having two CN functional groups, surrounds one metal ion and have coordinate bonds with the metal ion. However, these compounds not cubically but two dimensionally surround and have coordinate bonds with a metal ion, unlike 1,3,6-HTCN, represented by above Chemical Formula 1. FIG. 5 is a schematic view showing that the compounds, 1,2,3-PTCN, 1,3,5-PTCN, 1,3,6-HTCN, and 1,2,6-HTCN, are bonded on a surface of an electrode active material. As shown in the following Examples 11 to 14, 1,3,6-HTCN, which has an asymmetric (i.e. non-symmetrical) structure, has stronger adsorption on the surface of an electrode active material compared to 1,2,3-PTCN, or 1,3,5-PTCN (1,3,5-Pentane Tri-Cyanide) having symmetric structure among compounds having three 3 CN functional groups. When the compound represented by above Chemical Formula 1 is included in a positive electrode or a negative electrode for a rechargeable lithium battery, the compound represented by above Chemical Formula 1 can be included in a composition for fabricating a positive electrode or a negative electrode for a rechargeable lithium battery.

In another embodiment of the present invention, an electrode composition for a rechargeable lithium battery including the compound represented by above Chemical Formula 1 is provided. The composition can be a positive or a negative electrode composition for a rechargeable lithium battery.

In yet another embodiment of the present invention, an electrolyte composition for a rechargeable lithium battery including the compound represented by above Chemical Formula 1 is provided.

In still another embodiment of the present invention, provided is a method of manufacturing a rechargeable lithium battery that includes preparing an electrode composition for a rechargeable lithium battery and applying the electrode composition on an electrode current collector. According to the embodiment of the present invention, a rechargeable lithium battery is fabricated in a common method using well-known materials in the related art except for using the compound represented by above Chemical Formula 1.

A rechargeable lithium battery is classified into a lithium ion battery, a lithium ion polymer battery, and a lithium polymer battery according to the presence of a separator and the kind of electrolyte used in the battery. The rechargeable lithium batteries have a variety of shapes and sizes, and include cylindrical, prismatic, or coin-type batteries, and can be thin film batteries or be rather bulky in size. Structures and fabrication methods for these batteries are well known in the art.

FIG. 1 is an exploded perspective view showing a general cylindrical rechargeable lithium battery. Referring to FIG. 1, the rechargeable lithium battery 100 includes a negative electrode 112, a positive electrode 114, and a separator 113 interposed between the negative electrode 112 and positive electrode 114, a battery case 120, and a sealing member 140 sealing the battery case 120 and an electrolyte (not shown) that is impregnates the negative electrode 112, positive electrode 114, and separator 113. Such a lithium rechargeable battery 100 is fabricated by sequentially stacking the negative electrode 112, separator 113, and positive electrode 114, spiral-winding them, and housing the wound product in the battery case 120. FIG. 2 is exploded perspective view showing a general prismatic rechargeable lithium battery. Referring to FIG. 2, the rechargeable lithium battery 1 includes an electrode assembly including a negative electrode 2, a positive electrode 3, and a separator 4 between the negative electrode 2 and the positive electrode 3, a battery case 5 for housing the electrode assembly, an electrolyte injected in the case from the top, and a cap plate 6 sealing the battery case 5.

According to another embodiment of the present invention, a rechargeable lithium battery can have a cylindrical or prismatic shape but is not limited thereto and can have any shape such as a cylinder, a coin, a pouch, and the like, as long as it includes a separator for a rechargeable lithium battery and basically works as a battery. The negative electrode for a rechargeable lithium battery includes a current collector and a negative active material layer formed on the current collector, and the negative active material layer includes a negative active material.

The negative active material includes a material that reversibly intercalates/deintercalates lithium ions, lithium metal, a lithium metal alloy, a material being capable of doping/dedoping lithium, or a transition metal oxide. In an embodiment of the invention, the material that reversibly intercalates/deintercalates lithium ions is a carbon material. The carbon material is any generally-used carbon-based negative active material in a lithium ion rechargeable battery. Examples of the carbon material include crystalline carbon, amorphous carbon, and a combination thereof. The crystalline carbon can be non-shaped, or sheet, flake, spherical, or fiber shaped natural graphite or artificial graphite. The amorphous carbon can be a soft carbon, a hard carbon, a mesophase pitch carbonized product, fired coke, and the like. The lithium metal alloy includes lithium and a metal of Na, K, Rb, Cs, Fr, Be, Mg, Ca, Sr, Si, Sb, Pb, In, Zn, Ba, Ra, Ge, Al, or Sn. Examples of the material being capable of doping/dedoping lithium include Si, SiOₓ (0 < x < 2), a Si-C composite, a Si-Q alloy (wherein Q is an alkali metal, an alkaline-earth metal, 1 Group 13 to 16 elements, a transition element, a rare earth element, or a combination thereof, and not Si), Sn, SnO₂, a Sn-C composite, Sn-R (wherein R is an alkali metal, an alkaline-earth metal, Group 13 to 16 elements, a transition element, a rare earth element, or a combination thereof, and not Sn), and the like. In embodiments of the invention, specific elements of Q and R are selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. In embodiments of the invention, the transition metal oxide is vanadium oxide, lithium vanadium oxide, and the like. The negative active material layer includes a binder and optionally further includes a conductive material. The binder improves binding properties of negative active material particles with one another and with a current collector. Examples of the binder include polyvinylalcohol, carboxylmethylcellulose, hydroxypropylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. The conductive material is included to improve electrode conductivity. Any electrically conductive material can be used as a conductive material unless it causes a chemical change. Examples of the conductive material include a carbon-based material such as natural graphite, artificial graphite, carbon black, acetylene black, ketjen black, a carbon fiber, and the like; a metal-based material of metal powder or metal fiber including copper, nickel, aluminum, silver, and the like; a conductive polymer such as polyphenylene derivatives; or a mixture thereof. The current collector can be a copper foil, a nickel foil, a stainless steel foil, a titanium foil, a nickel foam, a copper foam, a polymer substrate coated with a conductive metal, or a combination thereof. The positive electrode of the rechargeable lithium battery includes a current collector and a positive active material layer disposed on the current collector. The positive active material includes a compound that reversibly intercalates and deintercalates lithium ions (lithiated intercalation compound). The positive active material includes a composite oxide including at least one selected from the group consisting of cobalt, manganese, and nickel, as well as lithium. In particular embodiments of the invention, the following compounds are used:
LiₐA_{1-b}R_{b}D₂ (wherein, in the above Chemical Formula, 0.90 ≤ a ≤ 1.8 and 0 ≤ b ≤0.5); LiₐE_{1-b}R_{b}O_{2-c}D_{c} (wherein, in the above Chemical Formula, 0.90 ≤ a ≤ 1.8, 0 ≤ b ≤0.5 and 0 ≤ c < 0.05); LiE_{2-b}R_{b}O_{4-c}D_{c} (wherein, in the above Chemical Formula, 0 ≤ b ≤ 0.5, 0 ≤ c ≤ 0.05); LiₐNi_{1-b-c}Co_{b}R_{c}D_{α} (wherein, in the above Chemical Formula, 0.90 ≤ a ≤ 1.8, 0 ≤ b ≤ 0.5, 0 ≤ c ≤0.05 and 0 < α ≤ 2); LiₐNi_{1-b-c}Co_{b}R_{c}O_{2-α}Z_{α} (wherein, in the above Chemical Formula, 0.90 ≤ a ≤ 1.8, 0 ≤ b ≤0.5, 0 ≤ c ≤ 0.05 and 0 < α < 2); LiₐNi_{1-b-c}Co_{b}RcO_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}D_{α} (wherein, in the above Chemical Formula, 0.90 ≤ a ≤ 1.8, 0 ≤ b ≤0.5, 0 ≤ c ≤ 0.05 and 0 < α ≤ 2); LiₐNi_{1-b-c}Mn_{b}RcO_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤ 0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J2(PO₄)₃ (0 ≤ f ≤ 2); Li_{(3-f)}Fe₂(PO₄)₃ (0 ≤ f ≤ 2); and LiFePO₄. In the above chemical formulae, A is Ni, Co, Mn, or a combination thereof; R is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof

The compound can have a coating layer on the surface or is mixed with a compound having a coating layer. In embodiments of the invention, the coating layer includes at least one coating element compound selected from the group consisting of an oxide of a coating element, a hydroxide of a coating element, an oxyhydroxide of a coating element, an oxycarbonate of a coating element, and a hydroxyl carbonate of a coating element. The compounds for a coating layer can be amorphous or crystalline. The coating element for a coating layer includes Mg, Al, Co, K, Na, Ca, Si, Ti, V, Sn, Ge, Ga, B, As, Zr, or a mixture thereof. The coating layer can be formed in a method having no negative influence on properties of a positive active material by including these elements in the compound. For example, the method includes any coating method such as spray coating, dipping, and the like but is not illustrated in more detail, since well-known to those who work in the related field. The positive active material layer includes a binder and a conductive material. The binder improves binding properties of the positive active material particles to one another and to a current collector. Examples of the binder include polyvinylalcohol, carboxylmethylcellulose, hydroxypropylcellulose, diacetylcellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. The conductive material is used to provide conductivity to an electrode. In the battery including the same, it includes any electronic conductive material as long as causing no chemical change. Examples of the conductive material includes one or at least one kind mixture of a conductive material such as natural graphite, artificial graphite, carbon black, acetylene black, ketjen black, a carbon fiber, a metal powder, a metal fiber or the like such as copper, nickel, aluminum, silver or the like, or a polyphenylene derivative or the like. In an embodiment of the invention, the current collector is Al but is not limited thereto. The negative and positive electrodes are fabricated in a method of mixing the active material, a conductive material, and a binder to prepare an active material composition and coating the composition on a current collector, respectively. The electrode manufacturing method is well known and thus, is not described in detail in the present specification. The solvent includes N-methylpyrrolidone and the like but is not limited thereto. The electrolyte includes a non-aqueous organic solvent and a lithium salt. The non-aqueous organic solvent serves as a medium for transmitting ions taking part in the electrochemical reaction of a battery. The non-aqueous organic solvent includes a carbonate-based, ester-based, ether-based, ketone-based, alcohol-based, or aprotic solvent. Examples of the carbonate-based solvent includes dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. Examples of the ester-based solvent includes methyl acetate, ethyl acetate, n-propyl acetate, 1,1-dimethylethyl acetate, methylpropinonate, ethylpropinonate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and examples of the ketone-based solvent include cyclohexanone, and the like. Examples of the alcohol-based solvent include ethyl alcohol, isopropyl alcohol, and the like, and examples of the aprotic solvent include nitriles such as R-CN (wherein R is a C2 to C20 linear, branched, or cyclic hydrocarbon group including a double bond, an aromatic ring, or an ether bond), amides such as dimethylformamide, dioxolanes such as 1,3-dioxolane, sulfolanes, or the like. The non-aqueous organic solvent is used singularly or in a mixture. When the organic solvent is used in a mixture, the mixing ratio can be controlled in accordance with a desirable battery performance. The carbonate-based solvent is prepared by mixing a cyclic carbonate and a linear carbonate. The cyclic carbonate and the linear carbonate are mixed together in a volume ratio of about 1:1 to about 1:9. Within this range, performance of electrolyte is improved. The non-aqueous organic electrolyte can be further prepared by mixing a carbonate-based solvent with an aromatic hydrocarbon-based solvent. The carbonate-based and the aromatic hydrocarbon-based solvents are mixed together in a volume ratio ranging from about 1:1 to about 30:1. In embodiments of the invention, the aromatic hydrocarbon-based organic solvent is represented by the following Chemical Formula 1A.

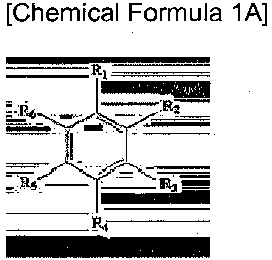

In Chemical Formula 1A, R₁ to R₆ are each independently hydrogen, a halogen, a C1 to C10 alkyl group, a C1 to C10 haloalkyl group, or a combination thereof.

The aromatic hydrocarbon-based organic solvent includes benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, or a combination thereof. The non-aqueous electrolyte further includes vinylene carbonate, an ethylene carbonate-based compound represented by the following Chemical Formula 2, or a combination thereof to improve cycle-life as an additive.

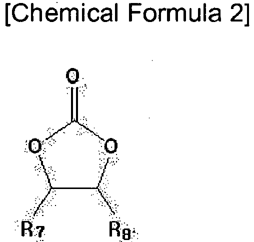

In Chemical Formula 2, R₇ and R₈ are independently selected from hydrogen, hydrogen, halogen, a cyano group (CN), a nitro group (NO₂), and a C1 to C5 fluoroalkyl group, provided that at least one of R₇ and R₈ is selected from halogen, a cyano group (CN), a nitro group (NO₂), and a C1 to C5 fluoroalkyl group. Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the vinylene carbonate or the ethylene carbonate-based compound used to improve cycle-life is adjusted within an appropriate range. The lithium salt is dissolved in an organic solvent, supplies lithium ions in a battery, basically operates a rechargeable lithium battery, and improves lithium ion transportation between positive and negative electrodes therein. Examples of the lithium salt include LiPF₆, LiBF₄, LiSbF₆, LiAsF₆, LiC₄F₉SO₃, LiClO₄, LiAlO₂, LiAlCl₄, LiN(SO₂CₓF₂ₓ₊₁)(SO₂CyF_{2y+1}), (where x and y are natural numbers), LiCl, Lil, LiB(C₂O₄)₂ (lithium bis(oxalato) borate, LiBOB), or a combination thereof, as a supporting electrolytic salt. The lithium salt is used in a concentration ranging from about 0.1 M to about 2.0 M. When the lithium salt is included at the above concentration range, an electrolyte has excellent performance and lithium ion mobility due to optimal electrolyte conductivity and viscosity. The separator 113 includes any materials commonly used in a conventional lithium battery, as long as it separates a negative electrode 112 from a positive electrode 114 and provides a transporting passage for lithium ions. In other words, the separator has a low resistance against ion transportation and an excellent impregnation for an electrolyte. For example, it is selected from glass fiber, polyester, TEFLON (tetrafluoroethylne), polyethylene, polypropylene, polytetrafluoroethylene (PTFE), or a combination thereof. It has a form of a non-woven fabric or a woven fabric. For example, as for a lithium ion battery, a polyolefin-based polymer separator such as polyethylene, polypropylene or the like is mainly used. In order to ensure heat resistance or mechanical strength of the lithium ion battery, a coated separator including a ceramic component or a polymer material can be used. Selectively, it has a mono-layered or multi-layered structure. According to an embodiment of the present invention, a rechargeable lithium battery further includes 1,3-propane sultone (PS), which has been conventionally used for increasing thermal impact durability, as well as the compound represented by above Chemical Formula 1. According to the embodiment of the present invention, the rechargeable lithium battery including the compound represented by above Chemical Formula 1 has remarkably increased thermal impact durability due to the compound itself and thus, it can include no or a little 1,3-propane sultone (PS), which has been conventionally used to improve thermal impact durability if necessary, but which has the problem of causing cancer.

The following examples illustrate the present invention in more detail. These examples, however, should not in any sense be interpreted as limiting the scope of the present invention.

### Examples 1-9: Fabrication of rechargeable lithium battery cell

Rechargeable lithium battery cells according to Examples 1 to 9 were fabricated by using LiMnO₂ as a positive electrode, graphite as a negative electrode, and an electrolyte solution prepared to have a composition provided in following Table 1 by mixing ethylenecarbonate (EC), ethyl methyl carbonate (EMC), and diethyl carbonate (DEC) in a volume ratio of 3:5:2 as a solvent and dissolving 0.95M of LiPF₆ in the mixed solvent, and then adding 6 parts by weight of FEC (fluoro ethylene carbonate), 0.5 parts by weight of VEC (vinyl ethylene carbonate), and 0.2 parts by weight of LiBF₄ as an electrolyte additive thereto based on 100 parts by weight of the electrolyte, and also, respectively adding SN (succinonitrile), PS (1,3-propane sultone), 3-MSPN (3-methanesulfonylpropionitrile), and/or 1,3,6-HTCN (1,3,6-Hexane Tri-Cyanide) in an amount of 1 to 3 parts by weight according to each Example. Examples marked with a "*" are included by way of reference.

**Table 1**

| | FEC (parts by weight) | VEC (parts by weight) | LBF (parts by weight) | PS (parts by weight) | SN (parts by weight) | 3-MSPN (parts by weight) | 1,3,6-HTCN (parts by weight) |
|---|---|---|---|---|---|---|---|
| *Example 1 | 6 | 0.5 | 0.2 | 1 | 3 | 0 | 0 |
| *Example 2 | 6 | 0.5 | 0.2 | 2 | 3 | 0 | 0 |
| *Example 3 | 6 | 0.5 | 0.2 | 2 | 2 | 0 | 0 |
| *Example 4 | 6 | 0.5 | 0.2 | 0 | 3 | 0 | 0 |
| *Example 5 | 6 | 0.5 | 0.2 | 0 | 3 | 1 | 0 |
| *Example 6 | 6 | 0.5 | 0.2 | 0 | 2 | 1 | 0 |
| Example 7 | 6 | 0.5 | 0.2 | 1 | 1 | 0 | 2 |
| Example 8 | 6 | 0.5 | 0.2 | 1 | 0 | 0 | 3 |
| Example 9 | 6 | 0.5 | 0.2 | 0 | 0 | 0 | 3 |

### Experimental Example 1: Thermal Impact Characteristic Test

The rechargeable lithium battery cells according to Examples 1 and 4 to 9 were tested about thermal impact in order to compare thermal impact characteristics depending on the kinds of the additives. The results are provided in following Table 2. The thermal impact test was performed by repetitively 30 times heating and cooling the rechargeable lithium battery cells from 80° C to -40° C for one hour to apply stress thereto. Then, the rechargeable lithium battery cells were allowed to stand at room temperature after applying thermal impact stress thereto as aforementioned and measured about an increased thickness rate relative to an initial thickness (Ini. ΔT (%)), an increased thickness rate relative to the maximum increased thickness (Max. ΔT(%)), an increased thickness (mm) relative to the maximum increased thickness (Max. T(mm)), an increased thickness rate relative to a desired thickness (Abs. ΔT(%)) and capacity retention and recovery capacity.

The capacity retention (%) of the rechargeable lithium battery cells was calculated by measuring rated capacity before the test, discharge capacity after the test by charging the rechargeable lithium batteries in the same method, and calculating "discharge capacity/rated capacity X 100".

The recovery capacity (%) of the rechargeable lithium battery cells was evaluated by performing rated charge and discharge and calculating "discharge capacity/rated capacity X 100" after measuring the capacity retention. The results are provided in following Table 2.

**Table 2**

| | Ini. ΔT (%) | Max. ΔT (%) | Max. T(mm) | Abs. ΔT (%) | Retention | Recovery |
|---|---|---|---|---|---|---|
| *Example 1 | 9.31 % | 10.20% | 4.98 | 5.22 % | 81.5% | 86.2% |
| *Example 4 | 18.76% | 25.81% | 5.67 | 14.18% | 76.2% | 81.0% |
| *Example 5 | 16.62% | 17.83% | 5.31 | 11.78% | 77.7% | 82.9% |
| *Example 6 | 16.01% | 18.10% | 5.32 | 11.53% | 78.8% | 83.7% |
| Example 7 | 7.19% | 7.54% | 4.89 | 3.33% | 84.9% | 89.8% |
| Example 8 | 6.56% | 6.82% | 4.75 | 3.87% | 85.2% | 90.2% |
| Example 9 | 4.35% | 5.89% | 3.89 | 2.96% | 88.2% | 92.5% |

As shown in Table 2, the rechargeable lithium battery cell including 1,3,6-HTCN (1,3,6-Hexane Tri-Cyanide) represented by Chemical Formula 1 according to Examples 7 to 9 had all improved results in terms of an increased thickness rate relative to an initial thickness (Ini. ΔT (%)), an increased thickness rate relative to the maximum increased thickness (Max. ΔT(%)), an increased thickness (mm) relative to the maximum increased thickness (Max. T(mm)), an increased thickness rate relative to a desired thickness (Abs. ΔT(%)) and retention and recovery rate after thermal impact, compared with the one including no 3-MSPN (3-methanesulfonylpropionitrile) or 1,3,6-HTCN according to Example 1, or the ones including no 1,3,6-HTCN according to Examples 4 to 6.

Accordingly, HTCN compound represented by Chemical Formula 1 turned out to improve thermal impact characteristic of the rechargeable lithium battery cell.

### Experimental Example 2: Thermal Impact Characteristic Comparison using Similar Compound

In order to predict surface stabilization effects, side reaction suppression effects, and bonding strength with metal ions of a positive electrode, succinitrile (SN: C₂H₄(CN)₂), and adiponitrile (AN: (CH₂)₄(CN)₂), which have been conventionally used as as an additive for a rechargeable lithium battery and have a similar structure to HTCN (hexane tricarbonate), a compound represented by Chemical Formula 1, coordination bonding energy between the compounds bonded on a surface of the positive electrode (LCO) and an electrode active material was quantum-chemically calculated through density functional theory (DFT) using a PAW (projector augmented wave) method and a PBE (perdew Burke Ernzerhof) function. As a result, 1,3,6-HTCN, a compound represented by Chemical Formula 1, turned out to be bonded on the surface of a positive electrode (LCO) with respectively about 3.9 and 7.3 kcal/mol larger bonding strength than the conventional additives, succinonitrile (SN: C₂H₄(CN)₂) and adiponitrile (AN: (CH₂)₄(CN)₂), for a positive electrode layer. The results are provided in Table 3.

**Table 3**

| compound | Eads (kcal/mol) | ΔEads | O.P.(V) |
|---|---|---|---|
| SN | -12.937 | 0.000 | 6.43 |
| AN | -9.570 | -3.367 | 6.05 |
| 1,3,6-HTCN | -16.857 | 3.920 | 6,28 |

In addition, 1,3,6-HTCN was calculated about complex compound formation energies with various metal ions, which exist as free ions (PBE0/6-311+g(d,p)). As a result, 1,3,6-HTCN was strongly bonded with ions such as Co³⁺, Ni²⁺, Fe²⁺, Mn⁴⁺, Cu⁺, and the like, and turned out to suppress a fine short circuit caused by extraction due to metal impurities in a battery cell on the surface of a negative electrode like SN or AN. The binding energy with metal ions is provided in following Table 4.

**Table 4**

| | De (kcal/mol) | | | | | | | | | |
|---|---|---|---|---|---|---|---|---|---|---|
| | | Co³⁺ | Δ | Ni²⁺ | Δ | Fe²⁺ | Δ | Mn⁴⁺ | Δ | Cu⁺ |
| SN | 3* | 806.36 | 0 | 345.85 | 0 | 313.32 | 0 | 502.29 | 0 | - |
| AN | 3* | 814.58 | 8.22 | 395.67 | 49.81 | 359.76 | 46.44 | 1643.56 | 1141.3 | |
| 1,3,6-HTCN | 2* | 791.00 | -15.36 | 385.25 | 39.4 | 350.11 | 36.79 | 1602.66 | 1100.4 | 136.61 |

| | | | | | | | | | | |
|---|---|---|---|---|---|---|---|---|---|---|
| * the number of compounds forming a complex compound with the surface of an active material or a metal ion | | | | | | | | | | |

Without wishing to be bound by a specific theory, such differences of binding energies are caused by the fact that the compound of Chemical Formula 1 having 3 to 9 CN functional groups and having k, l, and m, which are different from one another and are independently integers of 0 to 20, has an asymmetric structure, which allows the compound to form a stronger co-ordination bond with a metal ion on a surface of an active material or other metal ions in a battery compared with SN or AN having a symmetric structure.

FIGS. 3 and 4 are respectively schematic views showing bonding shapes of these compounds with an electrode surface material and coordination bonding shapes with metal ions. Referring to FIGS. 3 and 4, the compound (1,3,6-HTCN) represented by Chemical Formula 1 according to the present invention has a stronger bond with an active material on the surface of an electrode or metal ions in a battery cell than a conventional compound having a symmetric structure, such as SN or AN. In order to confirm this effect, the following battery cells according to Examples 10 to 16 were additionally fabricated.

### Examples 10-16: Fabrication of Rechargeable lithium battery cell

Rechargeable lithium battery cells according to Examples 10 to 16 were fabricated by using LiMnO₂ as a positive electrode, graphite as a negative electrode, and an electrolyte solution prepared by mixing ethylenecarbonate (EC), ethyl methyl carbonate (EMC), and diethyl carbonate (DEC) in a volume ratio of 3:5:2 as a solvent and dissolving 0.95M of LiPF₆ therein, and then adding 6 parts by weight of FEC (fluoro ethylene carbonate), 0.5 parts by weight of VEC (vinyl ethylene carbonate), and 0.2 parts by weight of LiBF₄ as an electrolyte additive thereto based on 100 parts by weight of the electrolyte, and also, respectively SN (succinonitrile) and PS (1,3-propane sultone) in an amount of 0 to 4 parts by weight according to each Example, and additionally, 1,3,6-HTCN (1,3,6-Hexane Tri-Cyanide) in an amount of 1 to 3 parts by weight or 1,3,5-PTCN (1,3,5-Pentane Tri-Cyanide) in an amount of 1 parts by weight. Both 1,2,3-PTCN (1,2,3-Propane Tri-Cyanide) and 1,3,5-PTCN (1,3,5-Pentane Tri-Cyanide) are similar to 1,3,6-HTCN in that they all are hydrocarbon compounds having three CN functional groups. However, 1,2,3-PTCN (1,2,3-Propane Tri-Cyanide) and 1,3,5-PTCN (1,3,5-Pentane Tri-Cyanide) have a symmetric molecular structure, unlike 1,3,6-HTCN.

A rechargeable lithium battery cell according to Example 10 as a control group included neither 1,3,6-HTCN nor the compound having a symmetric structure. The compositions of electrolyte additives according to the Examples are provided in following Table 5, and rechargeable lithium batteries including the additives were tested about the same thermal impacts like as the one according to Experimental Example 1. The results are provided in Table 6. In following Table 5, each additive or solvent was included according to a unit of part by weight.

**Table 5**

| | FEC | VEC | LBF | PS | SN | 1,3,6-HTCN | 1,2,3-PTCN | 1,3,5-PTCN |
|---|---|---|---|---|---|---|---|---|
| Example 10 | 6 | 0.5 | 0.2 | 2 | 4 | 0 | 0 | 0 |
| Example 11 | 6 | 0.5 | 0.2 | 3 | 0 | 1 | 0 | 0 |
| Example 12 | 6 | 0.5 | 0.2 | 3 | 0 | 2 | 0 | 0 |
| Example 13 | 6 | 0.5 | 0.2 | 3 | 0 | 3 | 0 | 0 |
| Example 14 | 6 | 0.5 | 0.2 | 3 | 1 | 2 | 0 | 0 |
| *Example 15 | 6 | 0.5 | 0.2 | 1 | 2 | 0 | 1 | 0 |
| *Example 16 | 6 | 0.5 | 0.2 | 1 | 2 | 0 | 0 | 1 |

**Table 6**

| | Ini. ΔT (%) | Max. ΔT (%) | Max. T(mm) | Abs. ΔT (%) | Retention | Recovery |
|---|---|---|---|---|---|---|
| Example 10 | 9.41% | 10.30% | 5.023 | 6.23 % | 80.5% | 83.3% |
| Example 11 | 8.38% | 9.89% | 5.011 | 5.80% | 84.9% | 87.8% |
| Example 12 | 5.72% | 6.88% | 4.650 | 2.38% | 84.5% | 88.5% |
| Example 13 | 5.15% | 5.89% | 4.755 | 1.44% | 87.4% | 91.3% |
| Example 14 | 5.65% | 6.32% | 4.532 | 2.77% | 85.5% | 90.5% |
| *Example 15 | 17.11% | 17.76% | 5.330 | 12.70% | 76.9% | 80.2% |
| *Example 16 | 16.62% | 17.83% | 5.319 | 11.53% | 78.8% | 83.7% |

As shown in Table 6, when 1,3,6-HTCN belonging to Chemical Formula 1 was used as an additive (Examples 11 to 14) had all improved effects in terms of an increased thickness rate relative to an initial thickness, an increased thickness rate relative to the maximum increased thickness, capacity retention , and recovery capacity after thermal impact compared with no 1,3,6-HTCN (Example 10) and a compound 1,2,3-PTCN (1,2,3-Propane Tri-Cyanide) or 1,3,5-PTCN (1,3,5-Pentane Tri-Cyanide), having similar structures or a symmetric structure (Examples 15 and 16).

### Experimental Example 3: Coordination binding energies between compounds on a surface of an electrode and electrode active material

1,2,3-PTCN, 1,3,5-PTCN, 1,3,6-HTCN, and 1,2,6-HTCN compounds were quantum-chemically calculated regarding coordination binding energies between the compounds on the surface of a positive electrode (LiMnO₂) and the electrode active material through a density functional theory (DFT) using a PAW (projector augmented wave) method and a PBE function in order to predict a surface stabilization effect of a positive electrode, suppression effects of a side reaction, and bonding strengths with metal ions. The results are provided in following Table 7. Herein, the results of SN compound are also provided for comparison.

**Table 7**

| Compound | Eads (kcal/mol) |
|---|---|
| SN | -12.947 |
| 1,2,3-PTCN | 34.138 |
| 1,3,5-PTCN | -11.287 |
| 1,3,6-HTGN | -16.089 |
| 1,2,6-HTCN | -14.595 |

As shown in Table 7, 1,3,6-HTCN and 1,2,6-HTCN, represented by Chemical Formula 1 are bonded on the surface of the positive electrode (LiMnO₂) with larger bonding strength than the compound 1,2,3-PTCN (1,2,3-Propane Tri-Cyanide) or 1,3,5-PTCN (1,3,5-Pentane Tri-Cyanide) having a similar structure or a symmetric structure.

In addition, FIG. 5 is a schematic view showing bonding shapes of the compounds with a surface of the electrode material. As shown in FIG. 5, the compounds (1,3,6-HTCN and 1,2,6-HTCN) represented by Chemical Formula 1 according to the present invention are more strongly bonded on the surface of the positive electrode (LCO) than 1,2,3-PTCN (1,2,3-Propane Tri-Cyanide) or 1,3,5-PTCN (1,3,5-Pentane Tri-Cyanide) having a similar structure or a symmetric structure.

As aforementioned, a rechargeable lithium battery cell including the compound represented by Chemical Formula 1 remarkably improves thermal impact durability, as the compound represented by above Chemical Formula 1 is bonded with the electrode surface material and suppresses gas generation on the surface of the positive electrode. In addition, the battery cell has an effect of having a coordination bond of a compound represented by Chemical Formula 1 with metal ions therein, and thus preventing a fine short circuit due to extraction of the metal ions on the surface of a negative electrode. Accordingly, a rechargeable lithium battery including a compound represented by Chemical Formula 1 can replace a rechargeable lithium battery that includes PS used as a conventional additive to improve thermal impact durability but having the problem of causing cancer. Alternatively, embodiments of the invention may reduce the amount of PS used in such batteries, thereby minimising exposure to PS and reducing the risk of cancer.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

**<Description of Symbols>**

| | | | |
|---|---|---|---|
| 1, 100: | rechargeable lithium battery, | 2, 112: | negative electrode |
| 4, 113: | separator, | 3, 114: | positive electrode |
| 5, 120: | battery case, | 6, 140: | sealing member |

## Claims

1. A rechargeable lithium battery comprising a compound of Chemical Formula 1: 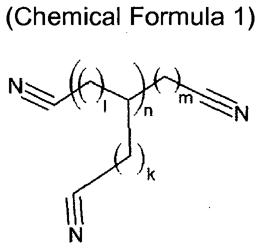 wherein, in Chemical Formula 1,
k, I and m are each an integer from 0 to 10; and
n is an integer from 1 to 5, provided that the compound of Chemical Formula 1 is not symmetrical.

2. An electrolyte composition for a rechargeable lithium battery, comprising a compound of Chemical Formula 1: 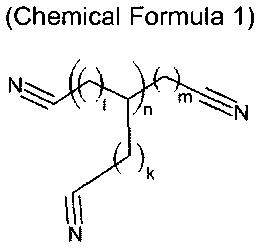 wherein, in Chemical Formula 1,
k, I and m are each an integer from 0 to 10; and
n is an integer from 1 to 5, provided that the compound of Chemical Formula 1 is not symmetrical.

3. The battery or composition according to Claim 1 or Claim 2, wherein in Chemical Formula 1,
k, I and m are each an integer from 0 to 7; and
n is an integer from 1 to 3.

4. The battery or composition according to Claim 3, wherein in Chemical Formula 1,
k is 0;
I and m are each an integer from 1 to 5; and
n is 1 or 2.

5. The battery or composition according to Claim 3, wherein in Chemical Formula 1, wherein in Chemical Formula 1:
k is 0, 1 is 2, m is 3, and n is 1; and/or
k is 0, 1 is 1, m is 4 and n is 1.

6. The battery according to Claims 1 and 3 to 5 and the composition according to Claims 2 to 5, wherein the integer values of k, l and m are different with respect to each other.

7. The battery according to Claims 1 and 3 to 6 and the composition according to Claims 2 to 6, wherein when n is greater than 1, each k has the same integer value and each I has the same integer value.

8. The battery according to Claims 1 and 3 to 7 and the composition according to Claims 2 to 7, wherein the compound of Chemical Formula 1 is 1,3,6-Hexane Tri-Cyanide (1,3,6-tricyanohexane; 1,3,6-HTCN) or 1,2,6-Hexane Tri-Cyanide (1,2,6-tricyanohexane; 1,2,6-HTCN).

9. The battery or the composition according to Claim 8, wherein the compound of Chemical Formula 1 is 1,3,6-Hexane Tri-Cyanide (1,3,6-tricyanohexane; 1,3,6-HTCN).

10. The battery according to any one of Claims 1 and 3 to 9, where the battery further comprises a positive electrode, a negative electrode and an electrolyte, wherein the compound of Chemical Formula 1 forms part of the:
positive electrode; and/or
negative electrode; and/or
electrolyte.

11. The battery according to Claim 10, wherein the compound of Chemical Formula 1 is included in an amount of 0.1 to 10% based on the total weight of electrolyte.

12. The composition according to any one of Claims 2 to 9, wherein the composition further comprises:
(a) 1,3-propane sultone, optionally wherein the weight to weight ratio of 1,3-propane sultone to 1,3,6-HTCN or 1,2,6-HTCN is from 1:2 to 3:1; and optionally
(b) succinonitrile, optionally wherein the weight to weight ratio of succinonitrile to 1,3,6-HTCN or 1,2,6-HTCN, when present, is 1:2.

13. The composition according to any one of Claims 2 to 9 and 12, wherein the composition further comprises a non-aqueous organic solvent and a lithium salt, optionally wherein:
(a) the non-aqueous organic solvent may include a carbonate-based, ester-based, ether-based, ketone-based, alcohol-based, aprotic solvent or mixtures thereof, optionally comprising an aromatic hydrocarbon-based solvent; and/or
(b) the lithium salt is selected from LiPF₆, LiBF₄, LiSbF₆, LiAsF₆, LiC₄F₉SO₃, LiClO₄, LiAlO₂, LiAlCl₄, LiN(CxF₂ₓ₊₁SO₂)(CyF_{2y+1}SO₂), (where x and y are natural numbers), LiCl, Lil, LiB(C₂O₄)₂ (lithium bis(oxalato) borate, LiBOB), or a combination thereof.

14. The composition of any one of Claims 2 to 9, 12 and 13, wherein the compound of Chemical Formula 1 is included in an amount of 0.1 to 10% based on the total weight of electrolyte.

## Patentansprüche

1. Wiederaufladbare Lithiumbatterie, umfassend eine Verbindung der Chemischen Formel 1: 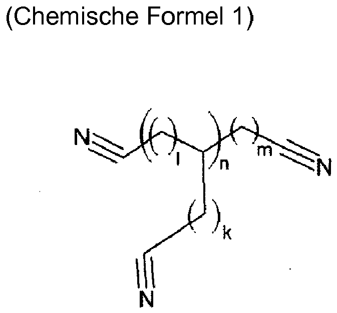 wobei in der Chemischen Formel 1
k, l und m jeweils eine ganze Zahl von 0 bis 10 sind und
n eine ganze Zahl von 1 bis 5 ist, vorausgesetzt, dass die Verbindung der Chemischen Formel 1 nicht symmetrisch ist.

2. Elektrolytzusammensetzung für eine wiederaufladbare Lithiumbatterie, umfassend eine Verbindung der Chemischen Formel 1: 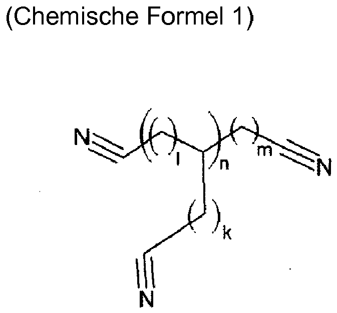 wobei in der Chemischen Formel 1
k, l und m jeweils eine ganze Zahl von 0 bis 10 sind und
n eine ganze Zahl von 1 bis 5 ist, vorausgesetzt, dass die Verbindung der Chemischen Formel 1 nicht symmetrisch ist.

3. Batterie oder Zusammensetzung nach Anspruch 1 oder Anspruch 2, wobei in der Chemischen Formel 1
k, l und m jeweils eine ganze Zahl von 0 bis 7 sind und
n eine ganze Zahl von 1 bis 3 ist.

4. Batterie oder Zusammensetzung nach Anspruch 3, wobei in der Chemischen Formel 1
k 0 ist,
l und m jeweils eine ganze Zahl von 1 bis 5 sind und
n 1 oder 2 ist.

5. Batterie oder Zusammensetzung nach Anspruch 3, wobei in der Chemischen Formel 1
k 0 ist, l 2 ist, m 3 ist und n 1 ist und/oder
k 0 ist, l 1 ist, m 4 ist und n 1 ist.

6. Batterie nach den Ansprüchen 1 und 3 bis 5 und Zusammensetzung nach den Ansprüchen 2 bis 5, wobei sich die ganzzahligen Werte von k, l und m voneinander unterscheiden.

7. Batterie nach den Ansprüchen 1 und 3 bis 6 und Zusammensetzung nach den Ansprüchen 2 bis 6, wobei, wenn n größer als 1 ist, jedes k denselben ganzzahligen Wert hat und jedes I denselben ganzzahligen Wert hat.

8. Batterie nach den Ansprüchen 1 und 3 bis 7 und Zusammensetzung nach den Ansprüchen 2 bis 7, wobei die Verbindung der Chemischen Formel 1 1,3,6-Hexantricyanid(1,3,6-tricyanhexan; 1,3,6-HTCN) oder 1,2,6-Hexan-tricyanid(1,2,6-tricyanhexan; 1,2,6-HTCN) ist.

9. Batterie oder Zusammensetzung nach Anspruch 8, wobei die Verbindung der Chemischen Formel 1 1,3,6-Hexan-tricyanid(1,3,6-tricyanhexan; 1,3,6-HTCN) ist.

10. Batterie nach einem der Ansprüche 1 und 3 bis 9, wo die Batterie ferner eine positive Elektrode, eine negative Elektrode und einen Elektrolyt umfasst, wobei die Verbindung der Chemischen Formel 1 einen Teil
der positiven Elektrode und/oder
der negativen Elektrode und/oder
des Elektrolyts bildet.

11. Batterie nach Anspruch 10, wobei die Verbindung der Chemischen Formel 1 in einer Menge von 0,1 bis 10% auf der Grundlage des Elektrolytgesamtgewichts enthalten ist.

12. Zusammensetzung nach einem der Ansprüche 2 bis 9, wobei die Zusammensetzung ferner umfasst:
(a) 1,3-Propansulton, wobei das Gewicht von 1,3-Propansulton und das Gewicht von 1,3,6-HTCN oder 1,2,6-HTCN optional im Verhältnis von 1:2 bis 3:1 stehen, und optional
(b) Succinonitril, wobei das Gewicht von Succinonitril und das Gewicht von 1,3,6-HTCN oder 1,2,6-HTCN optional, wenn vorhanden, im Verhältnis von 1:2 stehen.

13. Zusammensetzung nach einem der Ansprüche 2 bis 9 und 12, wobei die Zusammensetzung ferner ein nichtwässeriges organisches Lösungsmittel und ein Lithiumsalz umfasst, wobei optional:
(a) das nichtwässerige organische Lösungsmittel ein Lösungsmittel auf Carbonatbasis, ein Lösungsmittel auf Esterbasis, ein Lösungsmittel auf Etherbasis, ein Lösungsmittel auf Ketonbasis, ein Lösungsmittel auf Alkoholbasis, ein protonenfreies Lösungsmittel oder Mischungen daraus einschließen kann, optional umfassend ein aromatisches Lösungsmittel auf Kohlenwasserstoffbasis, und/oder
(b) das Lithiumsalz aus LiPF₆, LiBF₄, LiSbF₆, LiAsF₆, LiC₄F₉SO₃, LiClO₄, LiAlO₂, LiAlCl₄, LiN(CxF₂ₓ₊₁SO₂)(CyF_{2y+1}SO₂), (wo x und y natürliche Zahlen sind), LiCl, Lil, LiB(C₂O₄)₂-(lithium-bis(oxalato)-borat, LiBOB) oder einer Kombination daraus ausgewählt ist.

14. Zusammensetzung nach einem der Ansprüche 2 bis 9, 12 und 13, wobei die Verbindung der Chemischen Formel 1 in einer Menge von 0,1 bis 10% auf der Grundlage des Elektrolytgesamtgewichts enthalten ist.

## Revendications

1. Batterie au lithium rechargeable comprenant un composé de formule chimique 1 : 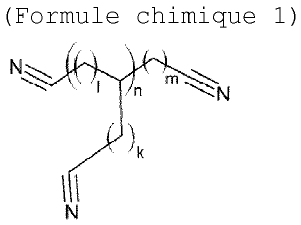 où, dans la formule chimique 1,
k, l et m sont chacun un nombre entier de 0 à 10 ; et
n est un nombre entier de 1 à 5, à la condition que le composé de la formule chimique 1 ne soit pas symétrique.

2. Composition électrolytique pour une batterie au lithium rechargeable, comprenant un composé de formule chimique 1 : 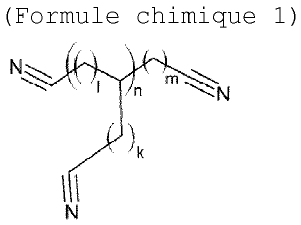 où, dans la formule chimique 1,
k, l et m sont chacun un nombre entier de 0 à 10 ; et
n est un nombre entier de 1 à 5, à la condition que le composé de la formule chimique 1 ne soit pas symétrique.

3. Batterie ou composition selon la revendication 1 ou la revendication 2, dans laquelle, dans la formule chimique 1,
k, l et m sont chacun un nombre entier de 0 à 7 ; et
n est un nombre entier de 1 à 3.

4. Batterie ou composition selon la revendication 3, dans laquelle, dans la formule chimique 1,
k est 0 ;
l et m sont chacun un nombre entier de 1 à 5 ; et
n est 1 ou 2.

5. Batterie ou composition selon la revendication 3, dans laquelle, dans la formule chimique 1 :
k est 0, l est 2, m est 3, et n est 1 ; et/ou
k est 0, l est 1, m est 4, et n est 1.

6. Batterie selon les revendications 1 et 3 à 5 et composition selon les revendications 2 à 5, dans lesquelles les valeurs entières de k, l et m sont différentes les unes des autres.

7. Batterie selon les revendications 1 et 3 à 6 et composition selon les revendications 2 à 6, dans lesquelles quand n est supérieur à 1, chaque k a la même valeur entière et chaque 1 a la même valeur entière.

8. Batterie selon les revendications 1 et 3 à 7 et composition selon les revendications 2 à 7, dans lesquelles le composé de la formule chimique 1 est l'hexane-1,3,6-tricyanure (1,3,6-tricyanohexane ; 1,3,6-HTCN) ou l'hexane-1,2,6-tricyanure (1,2,6-tricyanohexane ; 1,2,6-HTCN).

9. Batterie ou composition selon la revendication 8, dans laquelle le composé de formule chimique 1 est l'hexane-1,3,6-tricyanure (1,3,6-tricyanohexane ; 1,3,6-HTCN).

10. Batterie selon l'une quelconque des revendications 1 et 3 à 9, dans laquelle la batterie comprend en outre une électrode positive, une électrode négative et un électrolyte, dans laquelle le composé de formule chimique 1 constitue une partie de :
l'électrode positive ; et/ou
l'électrode négative ; et/ou
l'électrolyte.

11. Batterie selon la revendication 10, dans laquelle le composé de formule chimique 1 est inclus en une quantité de 0,1 à 10 % sur la base du poids total de l'électrolyte.

12. Composition selon l'une quelconque des revendications 2 à 9, dans laquelle la composition comprend en outre :
(a) de la 1,3-propane sultone, le rapport en poids / poids de la 1,3-propane sultone sur le 1,3,6-HTCN ou 1,2,6-HTCN étant éventuellement de 1/2 à 3/1 ; et
éventuellement
(b) du succinonitrile, le rapport en poids / poids du succinonitrile sur le 1,3,6-HTCN ou 1,2,6-HTCN, s'il est présent, étant éventuellement de 1/2.

13. Composition selon l'une quelconque des revendications 2 à 9 et 12, dans laquelle la composition comprend en outre un solvant organique non aqueux et un sel de lithium, où éventuellement :
(a) le solvant organique non aqueux peut comprendre un solvant à base de carbonate, à base d'ester, à base d'éther, à base de cétone, à base d'alcool, aprotique ou des mélanges de ceux-ci, comprenant éventuellement un solvant aromatique à base d'hydrocarbure ; et/ou
(b) le sel de lithium est choisi parmi LiBF₆, LiBF₄, LiSBF₆, LiAsF₆, Lic₄F₉SO₃, LiClO₄, LiAlO₂, LiAlCl₄, LiN (CxF₂ₓ₊₁SO₂) (CyF_{2y+1}SO₂), (où x et y sont des nombres naturels), LiCl, Lil, LiB(C₂O₄)₂ (bis (oxalato) borate de lithium, LiBOB), ou une combinaison de ceux-ci.

14. Composition selon l'une quelconque des revendications 2 à 9, 12 et 13, dans laquelle le composé de formule chimique 1 est inclus en une quantité de 0,1 à 10 % sur la base du poids total de l'électrolyte.
